(19) Europäisches Patentamt
European Patent Office
Office européen des brevets

(11) **EP 2 469 695 B1**

(12) **EUROPÄISCHE PATENTSCHRIFT**

(45) Veröffentlichungstag und Bekanntmachung des Hinweises auf die Patenterteilung:
**08.07.2020 Patentblatt 2020/28**

(51) Int Cl.:
*H02M 3/335* *(2006.01)*

(21) Anmeldenummer: **10196254.6**

(22) Anmeldetag: **21.12.2010**

(54) **Verfahren zur Regelung eines Schaltwandlers**

Method for regulating a switching converter

Procédé destiné au réglage d'un convertisseur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.06.2012 Patentblatt 2012/26**

(73) Patentinhaber: **Siemens Aktiengesellschaft**
**80333 München (DE)**

(72) Erfinder: **Hallak, Jalal**
**1220, Wien (AT)**

(74) Vertreter: **Maier, Daniel Oliver et al**
**Siemens AG**
**Postfach 22 16 34**
**80506 München (DE)**

(56) Entgegenhaltungen:
**US-A1- 2009 086 513    US-A1- 2009 091 955**
**US-A1- 2009 231 894    US-A1- 2010 039 835**
**US-A1- 2010 165 672    US-A1- 2010 315 838**

**Beschreibung**

Die Erfindung betrifft ein Verfahren zur Regelung eines Schaltwandlers mit quasiresonantem Schalten, wobei mittels eines PWM-Schaltreglers ein PWM-Schaltsignal mit einer variablen Taktfrequenz erzeugt wird und wobei ein Resonanzsignal erzeugt wird, welches die Valleys einer an einem Schaltelement anliegenden, mit einer Resonanzfrequenz schwingenden Spannung angibt. Zudem betrifft die Erfindung einen Schaltwandler zur Durchführung des Verfahrens.

Schaltelemente wie beispielsweise Feldeffekttransistoren enthalten ebenso wie Transformatoren oder Drosseln parasitäre Kapazitäten, welche zu Schaltverlusten bei hart schaltenden Wandlern führen. Bei einem hart schaltenden Wandler schwingt während der Totzeit im diskontinuierlichen Modus (DCM) die parasitäre Kapazität mit der Wandlerhauptinduktivität um eine Eingangsspannung bzw. Zwischenkreisspannung. Die Spannung an den parasitären Kapazitäten variiert mit der Schwingung, weist aber durchgehend signifikante Werte auf. Wenn das Schaltelement im nächsten Taktzyklus einschaltet, werden die parasitären Kondensatoren über den Transistor entladen und erzeugen dabei eine hohe Stromspitze. Die dabei hohe, am Schaltelement anliegende Spannung verursacht erhebliche Schaltverluste. Darüber hinaus ist die Stromspitze reich an Oberwellen, was die EMI erhöht.

Statt mit einem festen Takt zu schalten, wird bei quasiresonatem Schalten mittels eines Erkennungskreises ein Minimum (auch "Valley" genannt) der Drain-Source-Spannung des Schaltelements effektiv erfasst und das Schaltelement erst zu diesem Zeitpunkt eingeschalten. Dadurch wird die Einschaltstromspitze minimiert, da die parasitäre Kapazität auf die Mindestspannung geladen ist. Diese Art des Schaltens wird allgemein als Valley-Switching, Nulldurchgangsschalten oder quasiresonantes Schalten bezeichnet. Es führt zu einer Reduktion der Schaltverluste und der Störabstrahlung, welche bei hart schaltenden Wandlern auftreten. Da der Resonanzkreis nur während der Schaltübergänge an einem ansonsten herkömmlichen Rechtecksignalwandler eingesetzt wird, bezeichnet man dieses Schalten quasiresonant.

Im Folgenden wird jedes Minimum der am abgeschalteten Schaltelement anliegenden schwingenden Spannung als Valley bezeichnet. Das während einer Schaltperiode zeitlich zuerst auftretende Minimum wird als 1. Valley bezeichnet. Die nachfolgenden Valleys werden entsprechend ihrer zeitlichen Abfolge nummeriert, also 2. Valley, 3. Valley etc.

Das Einschalten während eines Valley bewirkt ein laufendes Zurücksetzen des Periodenbeginns (Impuls-Reset) und somit ein Anpassen der Schaltfrequenz unabhängig von der Last oder der Zwischenkreisspannung zu diesem Zeitpunkt. Diese Betriebsart beginnt an der Grenze zwischen kontinuierlichem (CCM) und diskontinuierlichem Leitungsmodus (DCM) und kommt im diskontinuierlichen Leitungsmodus voll zum Tragen.

Für den Fall, dass immer während des 1. Valley eingeschaltet wird, steigt mit sinkender Last die Schaltfrequenz, bis im Leerlauf eine Maximalfrequenz erreicht wird. Mit steigender Frequenz steigen jedoch auch die Schaltverluste, da pro Zeiteinheit mehr verlustbringende Schaltvorgänge stattfinden.

Um die zu hohe Schaltfrequenz bei wenig Last zu vermeiden, wird in der Regel der Einschaltzeitpunkt auf ein späteres Valley verlegt. Dabei kann es vorkommen, das bei bestimmten Leistungen zwischen den Valleys hin und her gesprungen werden muss, um die Ausgangsspannung konstant zu halten. Dieser Effekt wird auch "Valley-Skipping" genannt.

Aus der Schrift US 2009/091955 A1 sind ein Schaltwandler mit quasiresonantem Schalten sowie ein zugehöriges Verfahren zur Regelung des Schaltwandlers bekannt. Dabei findet ein Schaltvorgang eines Schalttransistors des Schaltwandlers trotz Laständerung immer im günstigen Minimum einer Drain-Source-Spannung des Schalttransistors statt. Dazu wird mit Hilfe einer so genannten Valley-Auswahleinheit das entsprechende Valley zum Einschalten des Schalttransistors ausgewählt.

Weiterhin ist aus der Schrift US 2010/0315838 A1 ebenfalls eine Vorrichtung sowie ein Verfahren zum Regeln bzw. Steuern eines Schaltnetzteils bekannt, bei welchem mittels quasiresonantem Schalten bzw. so genanntem "Valley Switching" Störabstrahlungen gering gehalten werden sollen.

Der Erfindung liegt die Aufgabe zugrunde, für einen quasiresonant schaltenden Schaltwandler eine Verbesserung gegenüber dem Stand der Technik anzugeben.

Erfindungsgemäß wird diese Aufgabe gelöst durch ein Verfahren gemäß Anspruch 1 und einen Schaltwandler gemäß Anspruch 10. In abhängigen Ansprüchen sind vorteilhafte Weiterbildungen der Erfindung angegeben.

Die Erfindung beruht darauf, dass ein PWM-Referenzsignal gebildet wird. Zur Erzeugung des PWM-Referenzsignals wird einem Sägezahnsignal des PWM-Schaltreglers eine zu der Taktfrequenz direkt proportionale Steuerspannung überlagert. Die jeweilige Impulsdauer des PWM-Referenzsignals ist dabei indirekt proportional zur Höhe der Taktfrequenz oder es besteht dabei ein linearer Zusammenhang mit fallender Impulsdauer bei steigender Frequenz. In weiterer Folge wird aus dem PWM-Referenzsignal ein Regelgrößensignal gebildet, indem dessen jeweilige Impulsdauer in Abhängigkeit des Resonanzsignals verlängert oder verkürzt wird. Zur Erreichung quasiresonanten Schaltens wird mittels eines Frequenzreglers laufend die Taktfrequenz angepasst, wobei das Regelgrößensignal dem PWM-Referenzsignal nachgeregelt wird. Sobald der Einschaltzeitpunkt vom Zeitpunkt eines Valleys abweicht, wird der Frequenzregler aktiv. Beispielsweise gibt der PWM-Schaltregler infolge geänderter Betriebsbedingungen bei vorläufig unveränderter Taktfrequenz eine längere Einschaltdauer des Schaltelements vor. Das Schaltelement schaltet also später ab, wodurch auch die Valleys später auftreten und sich das Resonanzsignal entsprechend ändert. Infolge der noch konstanten Taktfrequenz bleibt das PWM-Referenzsignal zunächst unverändert. Auch das Schaltelement schaltet unverändert ein, wodurch der Einschaltzeitpunkt vor dem Valley auftritt. Die Abhängigkeit vom geänderten Resonanzsignal bewirkt eine Verlängerung der Impulsdauer des Regelgrößensignals gegenüber der unveränderten Impulsdauer des PWM-Referenzsignals.

Um die Impulsdauer des Regelgrößensignals wieder an die Impulsdauer des PWM-Referenzsignals anzunähern, verringert der Frequenzregler die Taktfrequenz. Damit verlängert sich auch die Impulsdauer des PWM-Referenzsignals.

Umgekehrt führt eine zu kurze Einschaltdauer des Schaltelements zu verkürzten Impulsdauern des Regelgrößensignals. Der Frequenzregler erhöht dann die Taktfrequenz und die Impulsdauern des PWM-Referenzsignals verkürzen sich ebenfalls.

Wenn das Resonanzsignal ein späteres Auftreten der Valleys angibt, verlängert sich die Impulsdauer des Regelgrößensignals. Gibt das Resonanzsignal ein früheres Auftreten der Valleys an, verkürzt sich die Impulsdauer des Regelgrößensignals.

Es wird nicht direkt in den PWM-Schaltregelkreis eingegriffen, sondern nur laufend die Taktfrequenz angepasst. Diese Taktfrequenzanpassung mittels Frequenzregler führt dazu, dass das Regelgrößensignal dem Referenzsignal angenähert bleibt. Sobald Regelgrößensignal und Referenzsignal ausreichend übereinstimmen, findet quasiresonantes Schalten statt. Die ausgewogene Abstimmung zwischen den Eigenschaften des PWM-Schaltreglers und des Frequenzreglers sorgt für ein Verharren im quasiresonaten Schaltmodus. Es ergibt sich ein stabiler Betriebszustand ohne Zurücksetzung des Schaltperiodenbeginns (Impuls-Reset entfällt).

Dabei ist es von Vorteil, wenn zur Erzeugung des PWM-Referenzsignals einem Sägezahnsignal des PWM-Schaltreglers eine zu der Taktfrequenz direkt proportionale Steuerspannung überlagert. Die Steuerspannung ist dabei von der Stellgröße am Ausgang des Frequenzreglers abgeleitet. Ein Ansteigen der Stellgröße bewirkt einerseits ein Ansteigen der Taktfrequenz und andererseits ein Ansteigen der Steuerspannung. Die verkürzte Periode des Sägezahnsignals infolge des Taktfrequenzanstiegs und der Steuerspannungsanstieg führen zur Verkürzung der Impulsdauer. Die jeweilige Impulsdauer des PWM-Referenzsignals ist somit indirekt proportional zur Höhe der Taktfrequenz. Dabei ist günstigerweise das Ende eines Impulses des PWM-Referenzsignals mit dem Beginn des nächsten Impulses des PWM-Schaltsignals synchronisiert.

In einer einfachen Ausgestaltung des Verfahrens wird für den Frequenzregler die aktuelle Impulsdauer des Regelgrößensignals als Regelgröße vorgegeben und die aktuelle Impulsdauer des PWM-Referenzsignals als Führungsgröße vorgegeben. Eine Abweichung der Regelgröße von der Führungsgröße führt dann zu einer Signaländerung am Ausgang des Frequenzreglers, wodurch die Taktfrequenz verändert wird. Für ein Ändern des Einschaltzeitpunkts von einem Valley zu einem früheren oder späteren Valley ist es sinnvoll, für die jeweilige Impulsdauer des PWM-Referenzsignals eine obere Grenze und eine untere Grenze vorzugeben, wobei bei Erreichung einer Grenze mittels des Frequenzreglers ein Taktfrequenzsprung vorgegeben wird, welcher ein Einschalten des Schaltelements bei einem früheren oder späteren Valley bewirkt. Bei Erreichung der oberen Grenze der Impulsdauer des PWM-Referenzsignals ist gleichzeitig eine untere Grenze der Taktfrequenz erreicht. Der Frequenzregler gibt dann einen Taktfrequenzsprung nach oben vor, wodurch ein Einschalten des Schaltelements bei einem früheren Valley stattfindet. Wird die untere Grenze der Impulsdauer erreicht, gibt der Frequenzregler einen Taktfrequenzsprung nach untern vor und der Einschaltvorgang geschieht bei einem späteren Valley. Das quasiresonante Schalten erfolgt dann beispielsweise nicht mehr im 1. Valley, sondern im 2. Valley.

Bei der Bildung des Regelgrößensignals ist es vorteilhaft, wenn jeder Impuls des Regelgrößensignals gleichzeitig mit einem Impulsbeginn des PWM-Referenzsignals begonnen und gleichzeitig mit einer Impulsflanke des Resonanzsignals beendet wird.

Die Erzeugung des Resonanzsignals erfolgt vorteilhafterweise als Abfolge von Durchgangsimpulsen mittels eines Durchgangsdetektors, welcher die Durchgänge der Spannung am abgeschalteten Schaltelement durch einen Spannungsmittelwert erkennt. Der Spannungsmittelwert ist dabei auf ein Nullniveau umsetzbar, sodass Nulldurchgänge detektiert werden. Bei einem abfallenden Durchgang liegt ein jeweiliges Valley nach einem Viertel der Resonanzperiodendauer vor.

Eine Weiterbildung sieht vor, dass jeder Impuls des Regelgrößensignals gleichzeitig mit einer Durchgangsimpulsflanke des Resonanzsignals beendet wird.

Dabei ist es günstig, wenn für die obere Grenze der Impulsdauer des PWM-Referenzsignals ein Wert vorgegeben wird, der zwischen der Resonanzperiodendauer der am Schaltelement anliegenden Spannung und dem Zweifachen dieser Resonanzperiodendauer liegt. Damit ist sichergestellt, dass jeder Impuls des Regelgrößensignals dann endet, wenn das Resonanzsignal das nächste Valley angibt.

Eine einfache Verfahrensvariante sieht vor, dass das PWM-Schaltsignal einer Treiberstufe des Schaltelements zeitverzögert zugeführt wird. Das PWM-Schaltsignal ist beispielsweise auf die Durchgänge der Spannung am abgeschalteten Schaltelement durch einen Spannungsmittelwert abgestimmt. Als Zeitverzögerung des PWM-Schaltsignals wird dann eine Totzeit vorgegeben, welche einem Viertel der Resonanzperiodendauer der am Schaltelement anliegenden Spannung entspricht. Ein Einschalten des Schaltelements erfolgt dann bei einem Valley.

Ein erfindungsgemäßer Schaltregler umfasst eine Hauptwicklung, einen PWM-Schaltregler zur Erzeugung eines PWM-Schaltsignals mit einer Taktfrequenz, ein Schaltelement und einen Detektor zur Erzeugung eines Resonanzsignals, welches die Valleys angibt. Dabei ist ein erster Schaltkreis vorgesehen, welcher ein PWM-Referenzsignal mit derselben Taktfrequenz und einer zur Höhe der Taktfrequenz indirekt proportionalen jeweiligen Impulsdauer bildet. Zudem ist ein zweiter Schaltkreis vorgesehen, welcher aus dem PWM-Referenzsignal ein Regelgrößensignal bildet, dessen jeweilige Impulsdauer in Abhängigkeit des Resonanzsignals verlängert oder verkürzt ist. Dabei ist ein Frequenzregler zur Änderung der Taktfrequenz vorgesehen, welchem ein Differenzsignal zugeführt ist, das aus der Abweichung des Regelgrößensignals von dem PWM-Referenzsignal gebildet ist.

In einer einfachen Ausgestaltung ist die aktuelle Impulsdauer des PWM-Referenzsignals abzüglich der aktuellen Impulsdauer des Regelgrößensignals dem Frequenzregler als Differenzsignal zugeführt. Die jeweilige aktuelle Impulsdauer steht dabei einfacherweise als das jeweilige mittels Glättungsfilter geglättete Signal zur Verfügung.

Ein vorteilhafter Aufbau sieht vor, dass der PWM-Schaltregler einen Oszillator zur Erzeugung eines Sägezahnsignals umfasst, welches gemeinsam mit einem Stellgrößensignals am Ausgang des Frequenzreglers dem ersten Schaltkreis zur Erzeugung des PWM-Referenzsignals zugeführt ist. Dieser Schaltkreis bildet aus dem Ausgangssignal des Frequenzreglers die Steuerspannung, die durch Überlagerung mit dem Sägezahnsignal das PWM-Referenzsignal ergibt.

Zur einfachen Bildung des Resonanzsignals ist eine mit der Hauptwicklung magnetisch gekoppelte Hilfswicklung angeordnet, an welcher ein Nulldurchgangsdetektor eine Hilfsspannung abgreift, welche bei einem Durchgang der Spannung am Schaltelement durch den Mittelwert einen Nulldurchgang aufweist, wobei der Nulldurchgangsdetektor ein Nulldurchgangssignal ausgibt.

Dabei sieht eine einfache Ausführung vor, dass das PWM-Referenzsignal und das Nulldurchgangssignal dem zweiten Schaltkreis zur Erzeugung des Regelgrößensignals zugeführt sind. Das Nulldurchgangssignal steht als Resonanzsignal zur Verfügung, wobei die Impulsflanken die eine Viertelperiode vor den Spannungsmaxima bzw. Valleys auftretenden Nulldurchgänge angeben.

Die Erfindung wird nachfolgend in beispielhafter Weise unter Bezugnahme auf die beigefügten Figuren erläutert. Es zeigen in schematischer Darstellung:

Fig. 1    Diagramm der Taktfrequenz über der mittels Schaltwandler übertragenen Leistung

Fig. 2    Signalverarbeitung des Schaltwandlers

Fig. 3    Erzeugung des PWM-Referenzsignals (REF) bei hoher Taktfrequenz

Fig. 4    Erzeugung des PWM-Referenzsignals (REF) bei niedriger Taktfrequenz

Fig. 5    Abhängigkeit der Impulsdauer des PWM-Referenzsignals (REF) von der Taktfrequenz (f)

Fig. 6    Verlauf einer Leistungsänderung im Diagramm gemäß Fig. 1

Fig. 7    Erzeugung des Regelgrößensignals (REG)

Fig. 8-20    Änderungen der Signalverläufe bei Leistungsänderungen gemäß Fig. 6

Quasiresonantes Schalten (Valley Switching) eines Schaltwandlers wird durch Änderung der Taktfrequenz f realisiert. Beispielsweise gilt für einen Dreieckbetrieb eines Tiefsetzers:

$$I_{Out} = [U_{Out} \cdot (1 - U_{Out}/U_{In})]/(2 \cdot L \cdot f)$$

$$P_{Out} = [U_{Out}^2 \cdot (1 - U_{Out}/U_{In})]/(2 \cdot L \cdot f)$$

$I_{Out}$ ...    Ausgangsstrom
$U_{Out}$ ...    Ausgangsspannung
$U_{In}$ ...    Eingangsspannung

L ....    Induktivität des Schaltwandlers

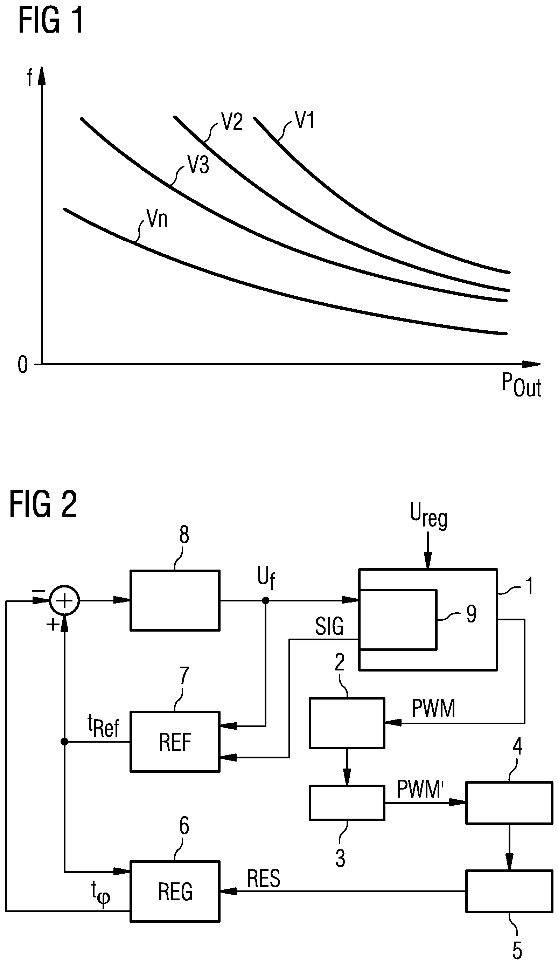

Wie in Fig. 1 dargestellt sinkt die Taktfrequenz f mit zunehmender Ausgangsleistung $P_{Out}$, wenn der Einschaltzeitpunkt des Schaltelements immer beim selben Valley V1 bzw. V2 bzw. V3 bzw. Vn erfolgt. Lässt man die Ausgangsleistung $P_{Out}$ unverändert, bewirkt ein späterer Einschaltzeitpunkt bei einem späteren Valley V2 bzw. V3 eine Herabsetzung der Taktfrequenz f.

Die für die Erfindung relevante Signalverarbeitung des Schaltwandlers zeigt in vereinfachter Form die Fig. 2. Einem PWM-Schaltregler 1 ist ein Ausgangssignal $U_{reg}$ eines nicht dargestellten Spannungsreglers zugeführt. Am Ausgang des PWM-Schaltreglers 1 liegt ein PWM-Schaltsignal PWM an, welches über eine Totzeitstufe 2 einer Treiberstufe 3 zugeführt ist. Gebildet wird das PWM-Schaltsignal PWM beispielsweise mittels eines reglerinternen Oszillators 9, welcher ein Sägezahnsignal SIG ausgibt. Die Überlagerung dieses Sägezahnsignals SIG mit dem Ausgangssignal $U_{reg}$ des Spannungsreglers ergibt das PWM-Schaltsignal PWM.

Ein Schaltelement einer Wandlereinheit 4 wird mittels der Treiberstufe 3 angesteuert. Dabei erkennt ein Nulldurchgangsdetektor 5 die Valleys V1, V2, V3...Vn der am abgeschalteten Schaltelement anliegenden, schwingenden Spannung $U_{DS}$. Dies erfolgt beispielsweise mittels einer nicht dargestellten Hilfswicklung der Wandlereinheit 4, welcher die schwingende Spannung $U_{DS}$ auf ein anderes Spannungsniveau überträgt. Die Nulldurchgänge der an der Hilfswicklung anliegenden Spannung $U_H$ entsprechen dann den Durchgängen der am Schaltelement anliegenden Spannung $U_{DS}$ durch deren Mittelwert.

Die gesuchten Valleys V1, V2, V3...Vn treten immer eine Viertelperiode nach einem abfallenden Nulldurchgang der Hilfsspannung $U_H$ auf. Ein Nulldurchgangssignal am Ausgang des Nulldurchgangsdetektors 5 gibt somit diese Valleys V1, V2, V3...Vn an. Bei einer einfachen weiteren Signalverarbeitung bildet dieses Nulldurchgangssignal das Resonanzsignal RES. Alternativ dazu ist als Resonanzsignal RES' ein weiterverarbeitetes Nulldurchgangssignal nutzbar. Beispielsweise kann das Resonanzsignal RES' als Resetsignal eines Mono-Flipflops ausgegeben werden, wobei bei jeder abfallenden Flanke des Nulldurchgangssignals ein kurzer Impuls erzeugt wird. Auch andere Modifikationen des Referenzsignals RES sind möglich, zum Beispiel durch Vorgabe einer Zeitverzögerung gegenüber dem Nulldurchgangssignal. Des Weiteren wird mittels eines intelligenten Messschaltkreises das Referenzsignal RES direkt aus der am Schaltelement anliegenden Spannung ableitbar.

Für quasiresonantes Schalten ist das PWM-Schaltsignal PWM einfacherweise auf die Nulldurchgänge der an einer Hilfswicklung anliegenden Hilfsspannung $U_H$ abgestimmt. Die notwendige Verzögerung um eine Viertelperiode erfolgt durch Vorgabe einer entsprechenden Totzeit $t_d$. Der Treiberstufe 3 ist das resultierende verzögertes PWM-Schaltsignal PWM' zugeführt.

Ein den Ausgangsspannungs-Regelungskreis überlagernder Regelungskreis wird mittels eines Frequenzreglers 8 realisiert. Dabei bestimmt der Frequenzregler 8 über ein ausgangsseitiges Stellgrößensignal $U_f$ die Taktfrequenz f, die dem PWM-Schaltsignal PWM und dem PWM-Referenzsignal REF zugrunde liegt. Dieses Stellgrößensignal $U_f$ weist eine untere Grenze $U_{fMin}$ und eine obere Grenze $U_{fMax}$ auf. Mit steigendem Stellgrößensignal $U_f$ steigt auch die Taktfrequenz f.

Zudem wird das Stellgrößensignal $U_f$ gemeinsam mit dem Sägezahnsignal SIG des Oszillators 9 dem ersten Schaltkreis 7 zur Erzeugung des PWM-Referenzsignals REF zugeführt. Dabei wird aus dem Stellgrößensignal $U_f$ ein Steuersignal $U_{STG}$ gebildet und dem Sägezahnsignal SIG überlagert. Bei entsprechender Auslegung der Schaltung wird das Stellgrößensignal $U_f$ direkt als Steuersignal $U_{STG}$ zur Erzeugung des PWM-Referenzsignals REF herangezogen. Die Impulsdauer $t_{REF}$ des sich ergebenden PWM-Referenzsinals REF ist umgekehrt proportional zur Höhe der Taktfrequenz f.

In einem zweiten Schaltkreis 6 wird aus dem PWM-Referenzsignal REF und dem Resonanzsignal RES ein Regelgrößensignal REG erzeugt. Dabei ist in weiterer Folge ein Differenzsignal des Regelgrößensignals REG und des PWM-Referenzsignals REF dem Frequenzregler 8 als Regelabweichung zugeführt. Konkret ergibt sich das Differenzsignal beispielsweise aus der jeweiligen Impulsdauer $t_{REF}$ des PWM-Referenzsignals REF abzüglich der jeweiligen Impulsdauer $t_{\varphi}$ des Regelgrößensignals REG. Zur Differenzbildung ist auch das jeweilige mittels Glättungsfilter geglättete Signal nutzbar. Beispielsweise drückt sich eine Verlängerung der Impulsdauer des Regelgrößensignals REG in einem Ansteigen des geglätteten Regelgrößensignals REG aus.

Die Bildung des Regelgrößensignals REG aus dem PWM-Referenzsignal REF erfolgt in Abhängigkeit des Resonanzsignals RES. Gibt das Resonanzsignal RES an, dass sich das als Schaltzeitpunkt vorgesehene Valley gegenüber dem tatsächlichen Schaltzeitpunkt zeitlich nach vorne verschieben, verkürzt sich die Impulsdauer des Regelgrößensignals REG. Die tatsächlichen Schaltzeitpunkte gibt dabei das PWM-Referenzsignal REF an, welchem dieselbe Taktfrequenz f wie dem PWM-Schaltsignal PWM zugrunde liegt.

Die Taktfrequenz f variiert zwischen eine Maximalwert $f_{Max}$ und einem Minimalwert $f_{Min}$. Vorgegeben wird dies durch eine Begrenzung des Stellgrößensignal $U_f$ am Ausgang des Frequenzreglers 8.

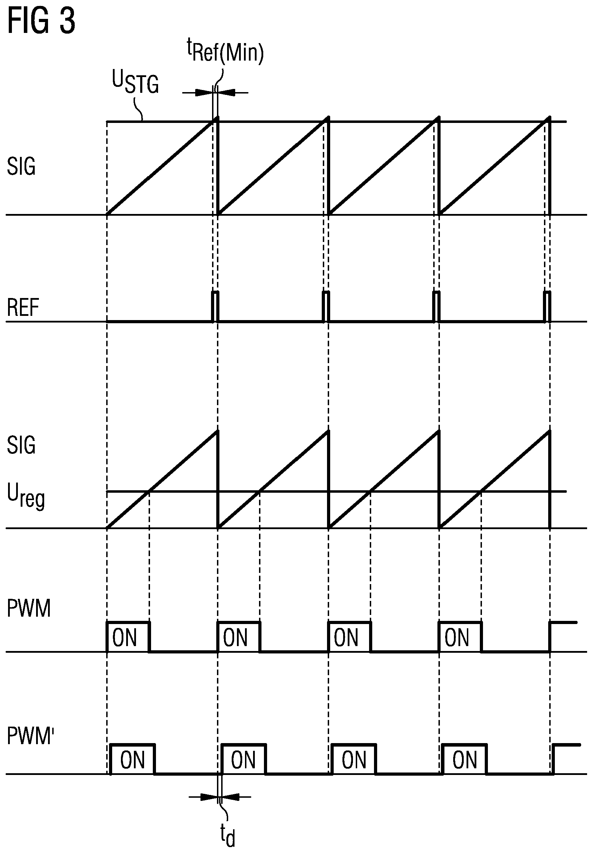

In Fig. 3 ist die Bildung des PWM-Referenzsignals REF bei maximaler Taktfrequenz $f_{Max}$ dargestellt. Das vom Oszillator 9 erzeugte Sägezahnsignal SIG bestimmt durch die Überlagerung mit dem Steuersignal $U_{STG}$ die Impulse des PWM-Referenzsignals REF. Das Steuersignal $U_{STG}$ entspricht dem Stellgrößensignal $U_f$ oder ist proportional zu diesem. In Fig. 3 ist die untere Grenze der Impulsdauer $t_{ref(Min)}$ des PWM-Referenzsignals REF bzw. der obere Grenzwert des Stellgrößensignals $U_f$ erreicht.

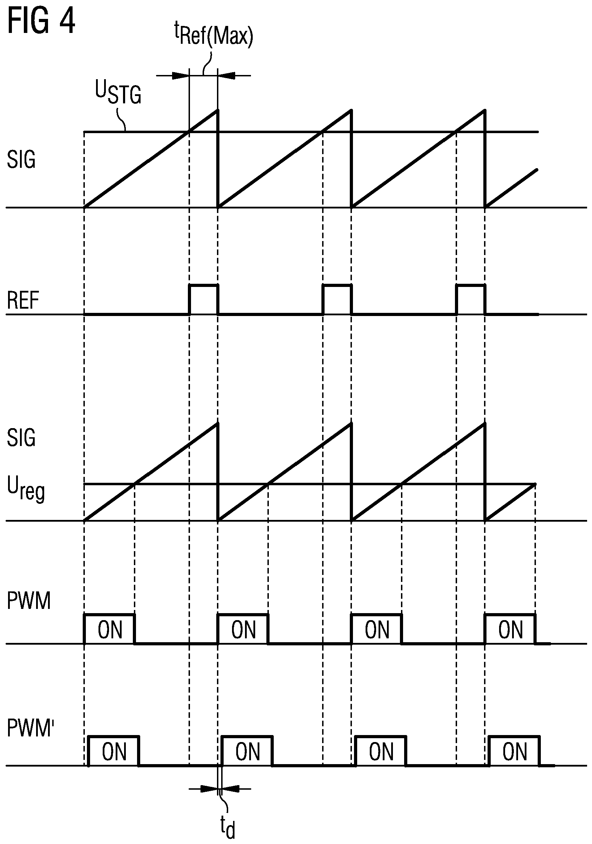

Fig. 4 zeigt die Bildung des Referenzsignals REF bei der niedrigsten Taktfrequenz $f_{Min}$. Das Stellgrößensignal $U_f$ hat den unteren Grenzwert erreicht und das PMW-Referenzsignals REF weist eine maximale Impulsdauer $t_{Ref(Max)}$ auf.

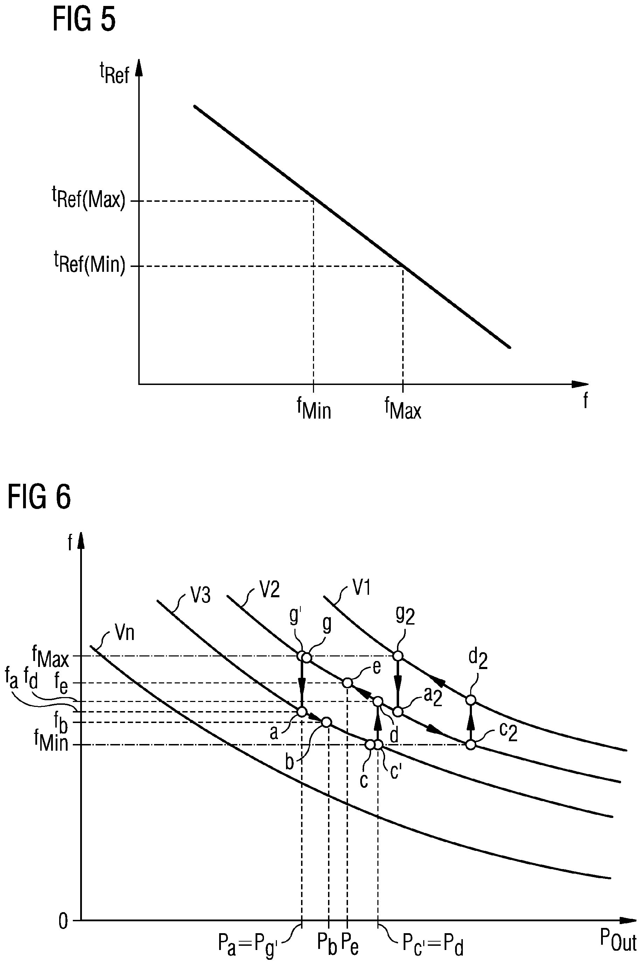

Zwischen den in den Figuren 3 und 4 dargestellten Extremen findet die Regelung statt. Dabei besteht im Bereich zwischen den Extremen ein linearer Zusammenhang zwischen der Impulsdauer $t_{Ref}$ des PWM-Referenzsignals REF und der Taktfrequenz f, wie in Fig. 5 dargestellt.

Fig. 6 zeigt in einem Diagramm die Taktfrequenz f über der übertragenen Leistung $P_{Out}$. Dabei ist der Verlauf eines Betriebspunktes angegeben, welcher bei veränderter Leistung $P_{Out}$ zwischen den ersten drei Valleys V1, V2, V3 hin und her wechselt. Ausgehend von einem Betriebspunkt a erfolgt zunächst eine Anstieg der Leistung $P_{Out}$ bis zu einem Betriebspunkt c, bei dem die untere Taktfrequenzgrenze $f_{Min}$ erreicht ist. Sobald diese untere Taktfrequenzgrenze $f_{Min}$ bzw. die obere Grenze der Impulsdauer $t_{ref(Max)}$ (welche z.B. der Periodendauer der Resonanzfrequenz der am Schaltelement anliegenden Spannung $U_{DS}$ entspricht) erreicht ist, gibt der Frequenzregler 8 einen Taktfrequenzsprung nach oben vor. Bei gleichbleibender Leistungsübertragung wird im neuen Betriebspunkt d mit höherer Frequenz $f_d$ bei einem früher auftretenden Valley V2 eingeschaltet. Erfolgt ein weiterer Anstieg der Leistung $P_{Out}$, sinkt die Taktfrequenz f wieder ab, bis ein Grenzwert erricht wird.

Wenn jedoch nach dem Taktfrequenzsprung nach oben die Leistung $P_{Out}$ sofort wieder absinkt, steigt die Taktfrequenz f weiter an, bis in einem Betriebspunkt g die obere Taktfrequenzgrenze $f_{Max}$ bzw. die untere Grenze der Impulsdauer $t_{ref(Min)}$ erreicht ist. Dann erfolgt ein Frequenzsprung nach unten und es wird bei einem später auftretenden Valley V3 eingeschaltet.

Zur Durchführung eines Taktfrequenzsprungs ist jedem oberen Grenzwert des Stellgrößensignals $U_f$ ein Wert des Stellgrößensignals $U_f$ zugeordnet, welches bei gleichbleibender Leistung $P_{Out}$ die niedrigere Taktfrequenz f für das quasiresonante Schalten bei einem späteren Valley bewirkt. Umgekehrt ist jedem unteren Grenzwert des Stellgrößensignals $U_f$ ein Wert des Stellgrößensignals $U_f$ zugeordnet, welches bei gleichbleibender Leistung $P_{Out}$ die höhere Taktfrequenz f für das quasiresonante Schalten bei einem früheren Valley bewirkt.

Diese Zuordnungen erfolgen beispielsweise mittels geeigneter Speichermittel oder mittels einer intelligenten Schaltung, die auf einen anderen Signalwerten umschaltet, sobald ein Grenzwert erricht wird.

Vorteilhaft ist es jedoch, die einzelnen Signale in der Weise aufeinander abzustimmen, dass bei Erreichung eines Grenzwertes zwangläufig ein entsprechender Taktfrequenzsprung erfolgt.

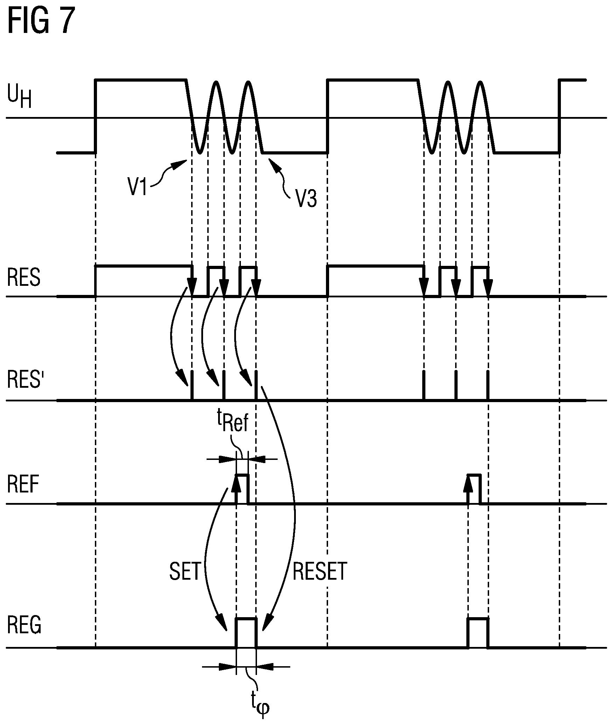

In Fig. 7 ist die Bildung des PWM-Referenzsignals REF dargestellt. An einer Hilfswicklung des Schaltwandlers liegt eine Hilfsspannung $U_H$ an. Die Hilfsspannung $U_H$ bildet die am Schaltelement anliegende Spannung $U_{DS}$ auf einem anderen Spannungsniveau ab. Dabei ist die schwingende Hilfsspannung $U_H$ im Mittel gleich Null.

Mittels der Nulldurchgangserkennung 5 werden die Nulldurchgänge der Hilfsspannung $U_H$ erkannt und als Resonanzsignal RES ausgegeben. In einer Zwischenstufe kann mittels eines Mono-Flip-Flops ein Resetsignal als modifiziertes Resonanzsignal RES' gebildet werden. Dieses Resetsignal weist bei jeder abfallenden Flanke des Resonanzsignals RES einen kurzen Impuls auf.

Ein Impuls des Regelgrößensignals REG beginnt zeitgleich mit einem Impuls des PWM-Referenzsignals REF. Das Impulsende und damit die Impulsdauer $t_\varphi$ des Regelgrößensignals REG hängt jedoch vom Resonanzsignal RES ab. Konkret wird das Impulsende durch einen abfallenden Nulldurchgang der Hilfsspannung $U_H$ getriggert. Dieses Ereignis ist durch eine abfallende Flanke des Resonanzsignals RES bzw. durch den Impuls des modifizierten Resonanzsignals RES' angegeben.

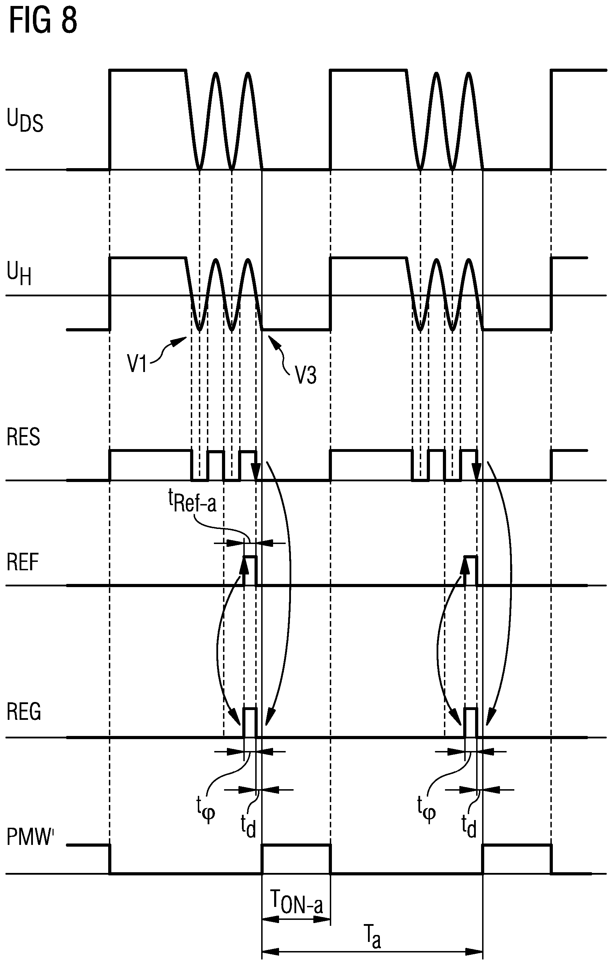

Die folgenden Figuren 8 bis 20 beziehen sich auf den in Fig. 6 eingezeichneten Betriebspunktverlauf, ausgehend vom Betriebespunkt a über die Betriebspunkte b, c, d, e bis zum Betriebspunkt g. Entsprechendes gilt für einen Betriebspunktverlauf $a_2$, $c_2$, $d_2$, $g_2$ bei einer höheren Leistung $P_{Out}$.

In Fig. 8 sind die Signalverläufe im ersten Betriebspunkt a dargestellt, bei einer stabilen Leistung $P_a$ und einer stabilen Taktfrequenz $f_a$.

Der Impuls des PWM-Schaltsignals PWM' startet beim dritten Valley V3. Damit beginnt die Einschaltzeit $t_{On-a}$ des Schaltelements. Sobald eine vom Spannungsregler vorgegebene Stromaufnahme erreicht ist, endet die Einschaltzeit $t_{On-a}$ und am Schaltelement baut sich eine Drain-Source-Spannung $U_{DS}$ auf. Im lückenden Betriebsmodus folgt die für das quasiresonante Schalten genutzte Schwingungsphase der Drain-Source-Spannung $U_{DS}$.

Wie bereits erwähnt ist das PWM-Schaltsignal PWM' ein um die Totzeit $t_d$ verzögertes Signal. Die Totzeit $t_d$ entspricht einer Viertelperiode der schwingenden Drain-Source-Spannung $U_{DS}$, wenn die Valleys V1, V2, V3...Vn mittels der abfallenden Nulldurchgänge der Hilfsspannung $U_H$ angezeigt werden.

Im dargestellten Betriebspunkt a entspricht die Zeitspanne zwischen dem Auftreten eines abfallenden Nulldurchgangs der Hilfsspannung $U_H$ und dem Beginn der Einschaltzeit $t_{On-a}$ genau der Totzeit $t_d$. Es liegt deshalb quasiresonantes Schalten beim 3. Valley V3 vor.

Das mit demselben Sägezahnsignal SIG wie das PWM-Schaltsignal PWM erzeugte PWM-Referenzsignal REF ist nicht verzögert. Der jeweilige Impuls des PWM-Referenzsignals REF beginnt deshalb um die Todzeit $t_d$ früher als der entsprechende Impuls des PWM-Schaltsignals PWM'. Die aktuelle Impulsdauer $t_{REF-a}$ des PWM-Referenzsignals REF ist indirekt proportional zur Höhe der Traktfrequenz f festgelegt.

Die Impulsdauer $t_\varphi$ des Regelgrößensignals REG beginnt zeitgleich mit der Impulsdauer $t_{REF-a}$ des PWM-Referenzsignals REF und endet mit dem nächsten abfallenden Nulldurchgang der Hilfsspannung $U_H$.

Da genau beim 3. Valley V3 eingeschaltet wird, stimmen das Regelgrößensignal REG und des PWM-Referenzsignal REF überein.

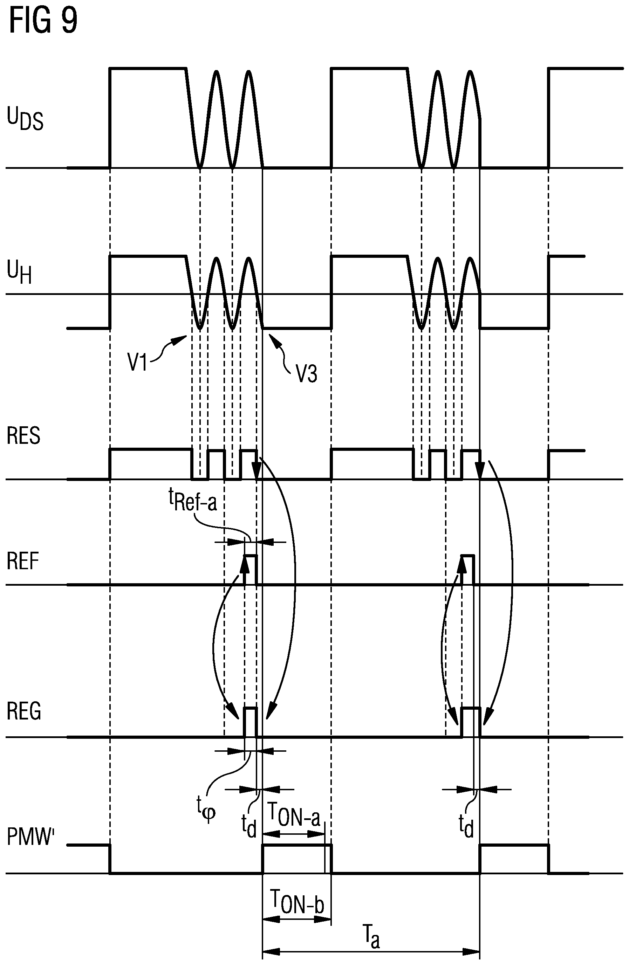

Im nächsten Schritt erfolgt der Übergang zum Betriebspunkt b mit einer höheren Leistung $P_b$, dargestellt in Fig. 9.

Dabei bewirkt die Leistungserhöhung eine Verlängerung der Einschaltzeit $t_{On-b}$ des Schaltelements. Dies geschieht mittels PWM-Schaltregler 1. Der Frequenzregler 8 greift noch nicht ein, weshalb die Taktfrequenz f und somit die Periodendauer $T_a$ des PWM-Schaltsignals PWM' unverändert bleibt.

Die Valleys V1, V2, V3 treten jedoch infolge der längeren Einschaltzeit $t_{On-b}$ später auf, sodass das Schaltelement zu früh einschaltet, vor dem Erreichen des 3. Valley V3.

Der folgende Impuls des PWM-Referenzsignals REF und der folgende Impulsbeginn des Regelgrößensignals REG sind nach wie vor durch die unveränderten Periodendauer $T_a$ bestimmt. Da die Nulldurchgänge der Hilfsspannung $U_H$ später auftreten, verzögert sich jedoch das Impulsende des Regelgrößensignals REG und die Impulsdauer $t_\varphi$ ist länger als die noch unveränderte Impulsdauer $t_{Ref-a}$ des PWM-Referenzsignals REF.

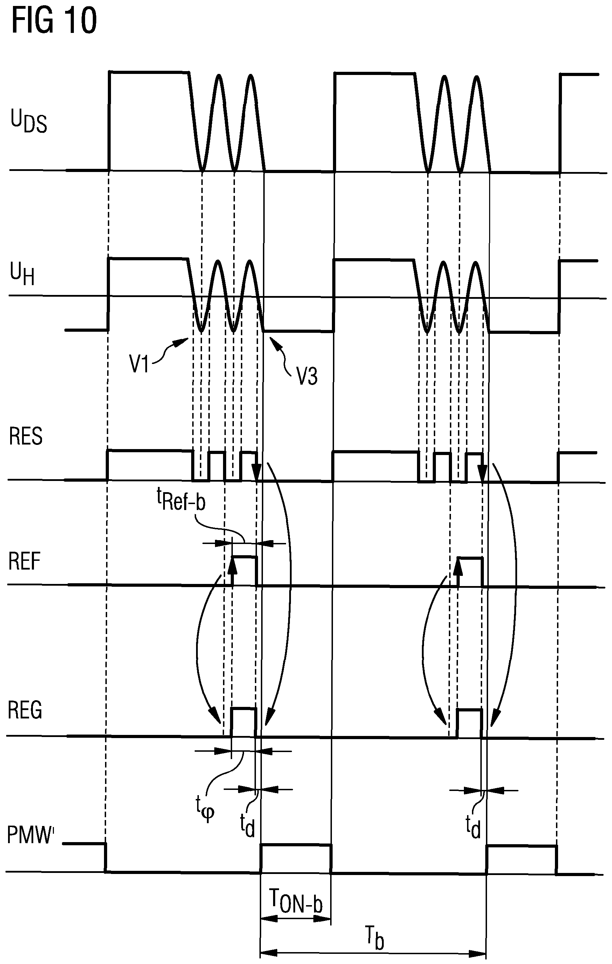

Das resultierende Differenzsignal am Eingang des Frequenzreglers 8 bewirkt über das Stellgrößensignal $U_f$ eine niedrigere Taktfrequenz $f_b$. Damit ist wieder ein stabiler Betriebszustand b erreicht, wobei quasiresonantes Schalten beim 3. Valley auftritt. Die entsprechenden Signalverläufe sind in Fig. 10 dargestellt.

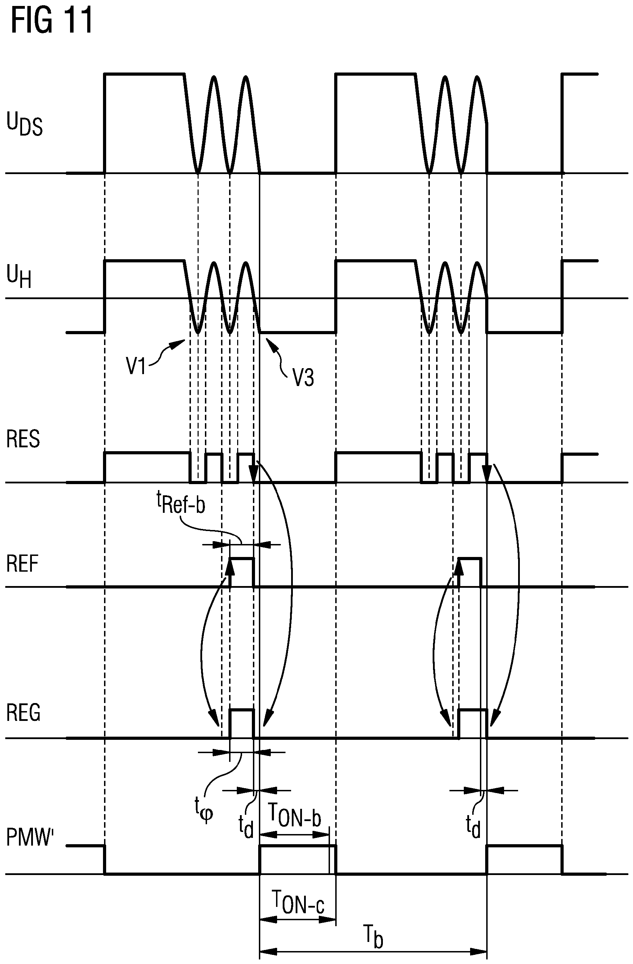

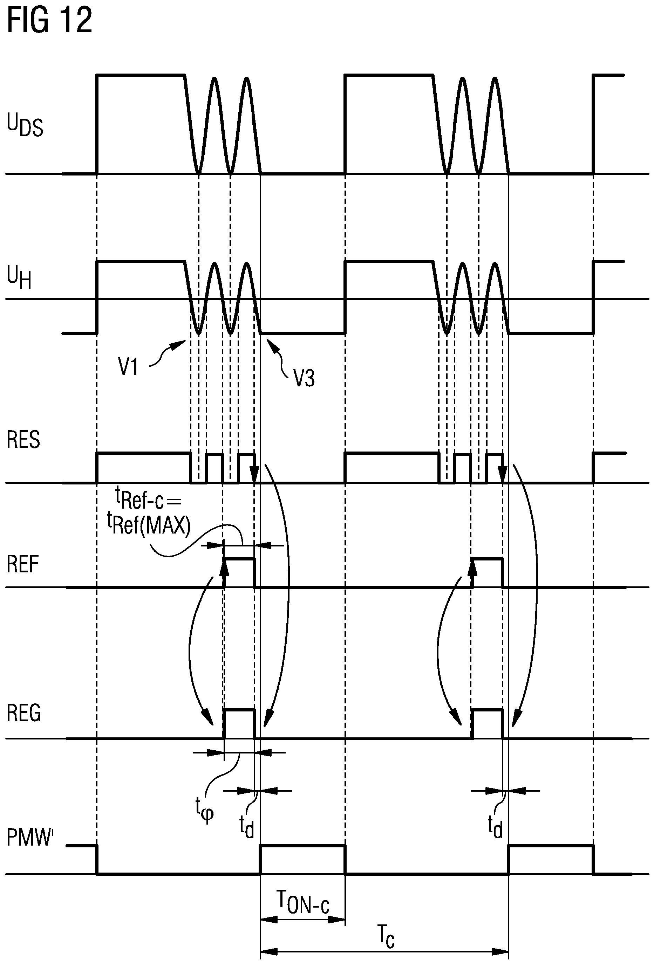

Die Auswirkungen des Übergangs auf eine noch höhere Leistung $P_c$ zeigen Fig. 11 und Fig. 12.

Wie zuvor beim Anstieg der Leistung $P_{Out}$ von Betriebspunkt a zu Betriebspunkt b erhöht sich die Impulsdauer $t_{Ref}$ des PWM-Referenzsignals REF, bis der Betriebspunkt c erreicht ist. Die Impulsdauer $t_{Ref-c}$ $(=t_{Ref(Max)})$ hat in diesem stabilen Betriebspunkt c fast die Länge der Periodendauer der Resonanzfrequenz der schwingenden Spannung $U_{DS}$ erreicht (Fig. 12).

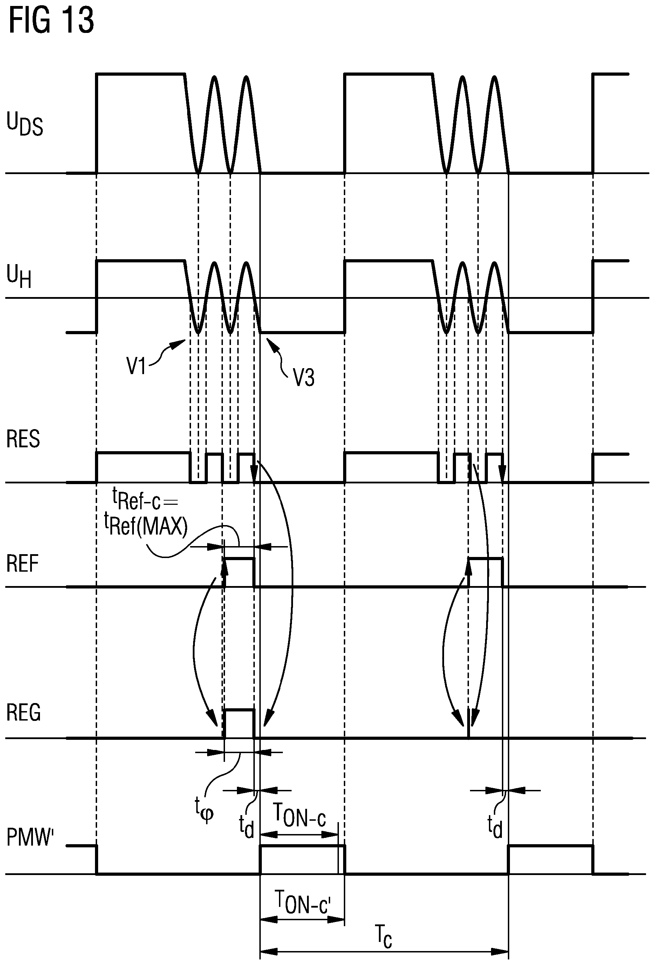

Steigt die Leistung $P_{Out}$ weiter geringfügig an, wird der Grenzbetriebspunkt c' erreicht (Fig. 13). Die Taktfrequenz $f_c$ und somit die Periodendauer $T_c$ des PWM-Schaltsignals PWM bleibt zunächst wieder unverändert. Das gilt auch für den Impuls des PWM-Referenzsignals REF und den Impulsbeginn des Regelgrößensignals REG.

Die Einschaltdauer $t_{On-c'}$ des Schaltelements ist jedoch bereits verlängert. Damit verschiebt sich das Auftreten der Valleys V1, V2, V3 und der Spannungsnulldurchgänge nach hinten.

Konkret verschieben sich die Valleys V1, V2, V3 zeitlich so weit nach hinten, dass der Impuls des Referenzgrößensignals REF beginnt, bevor der vor dem 2. Valley auftretende Nulldurchgang erfolgt. Dieser Nulldurchgang bewirkt somit das Impulsende des Regelgrößensignals REG.

Die neue Impulsdauer $t_\varphi$ des Regelgrößensignals REG ist somit sehr kurz gegenüber der Impulsdauer $t_{Ref-c}$ des PWM-Referenzsignals REF und das Vorzeichen des Differenzsignals am Eingang des Frequenzreglers 8 kehrt sich um. Die untere Taktfrequenzgrenze $f_{Min}$ ist erreicht.

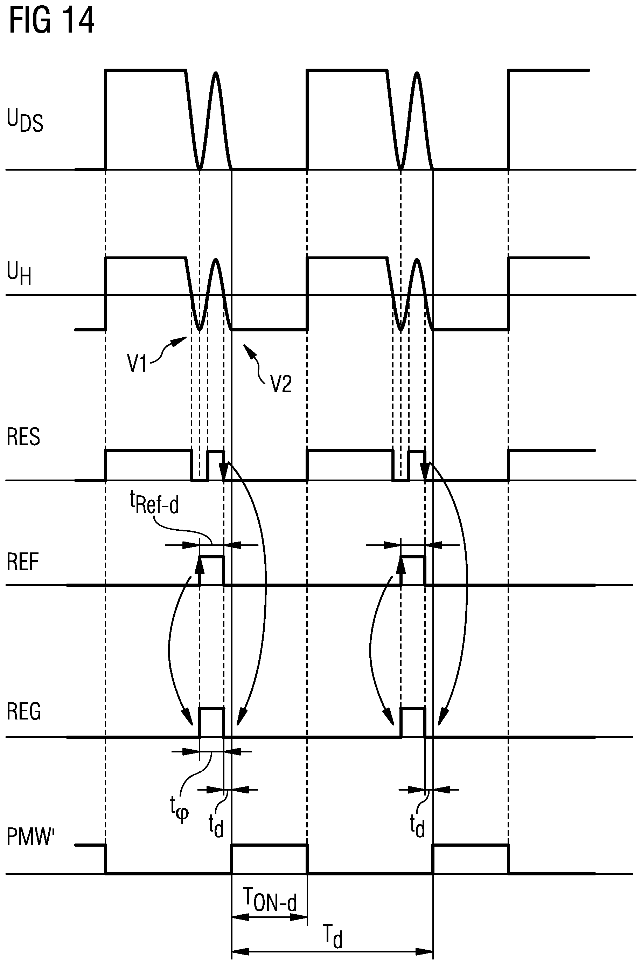

Die sprunghafte Änderung des Differenzsignals bewirkt einen sprunghaften Anstieg des Stellgrößensignals $U_f$. Bei gleichbleibender Leistung $P_{c'}$ springt die Taktfrequenz f auf den Wert $f_d$, welcher ein quasiresonantes Schalten beim 2. Valley V2 bewirkt. Damit ist wieder ein stabiler Zustand erricht, dargestellt in Fig. 14. Der Betriebspunkt c' ist somit als Umkippungspunkt des kurz davor noch stabilen Betriebspunktes c anzusehen.

Die Proportionalitäten zwischen den einzelnen Signalen sind dabei so abgestimmt, dass sich zwangsläufig der richtige Taktfrequenzsprung einstellt. Das betrifft insbesondere das Verhältnis zwischen der Impulsdauer $t_{Ref}$ des PWM-Referenzsignals REF und der Taktfrequenz f.

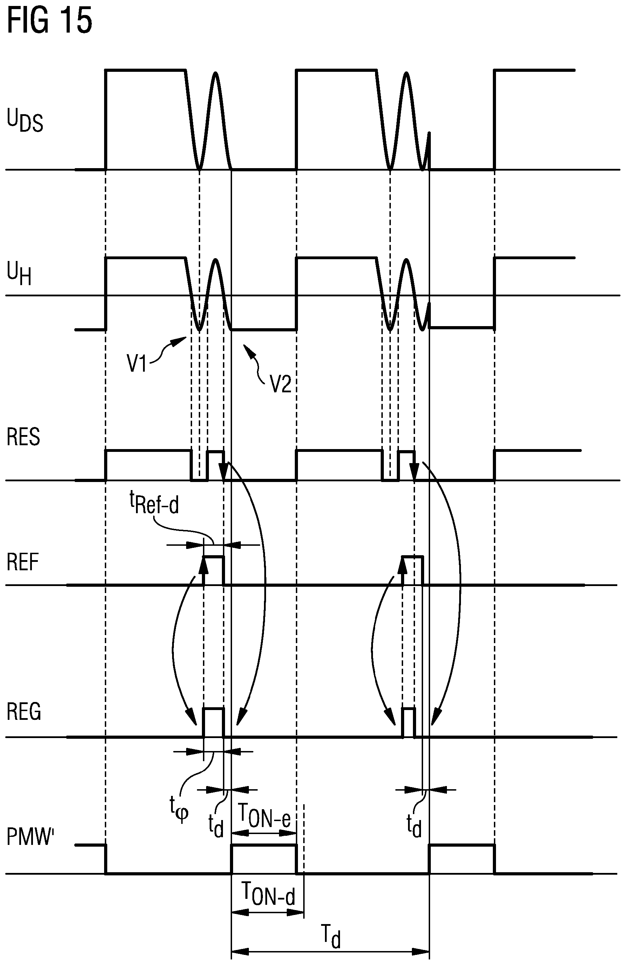

Fig. 15 zeigt vom neuen Betriebspunkt d ausgehend einen Übergang zu einer geringeren Leistung $P_e$. Dementsprechend sinkt die Einschaltzeit $t_{On-e}$ des Schaltelements. Die Taktfrequenz $f_d$ und somit die Periodendauer $T_d$ bleiben zunächst wieder unverändert.

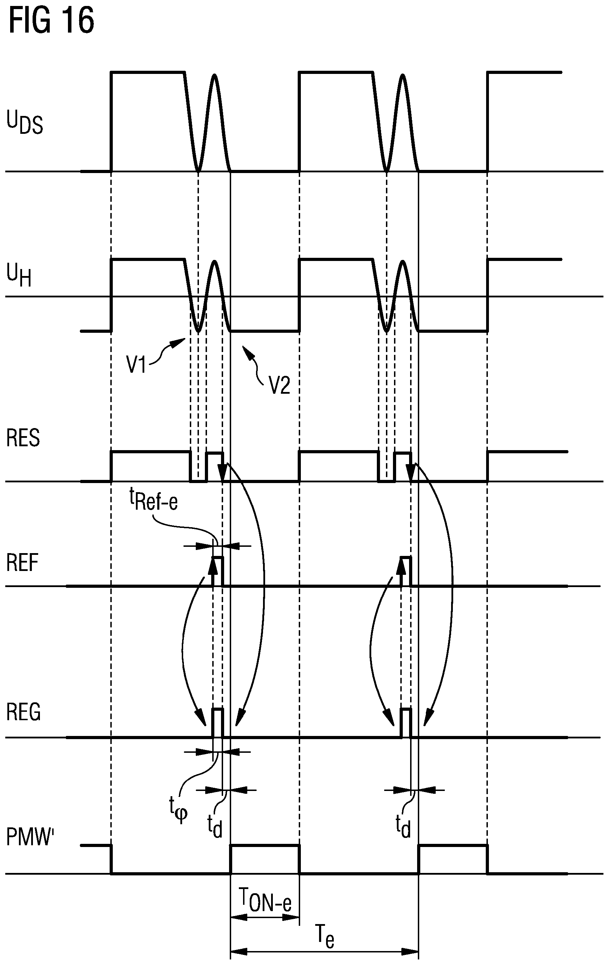

Die Valleys V1, V2 treten früher auf, sodass sich die Impulsdauer $t_\varphi$ des Regelgrößensignals REG gegenüber der Impulsdauer $t_{Ref-d}$ des PWM-Referenzsignals REF verkürzt. Das bewirkt einen Anstieg des Stellgrößensignals $U_f$ und somit eine höher Taktfrequenz $f_e$. Die dazu indirekt proportionale Impulsdauer $t_{Ref-e}$ des PWM-Referenzsignals REF sinkt und es ist wieder ein stabiler Zustand erreicht, wie in Fig. 16 dargestellt.

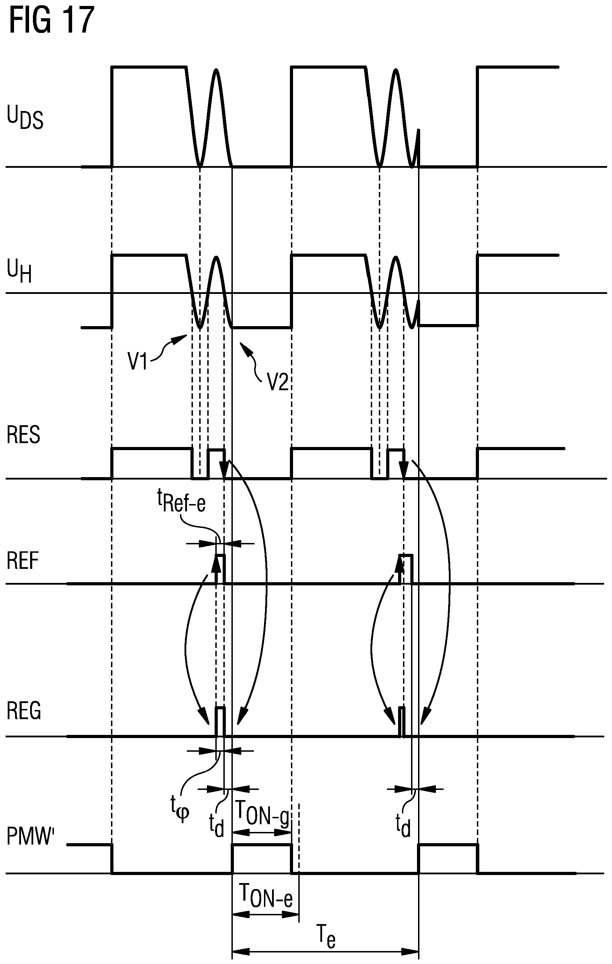

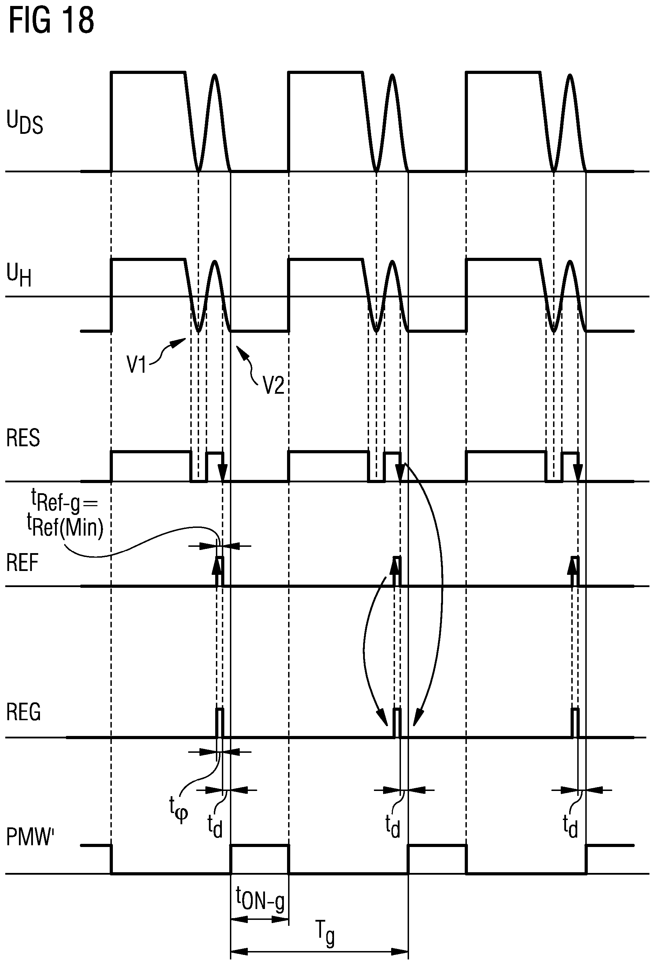

Ein weiteres Absenken auf eine niedrigere Leistung $P_g$ ist in Fig. 17 und Fig. 18. dargestellt. Die Impulsdauer $t_{Ref-g}$ des PWM-Referenzsignals REF sinkt bis zum Erreichen des noch stabilen Betriebszustands g ab und erreicht den Minimalwert $t_{Ref(Min)}$.

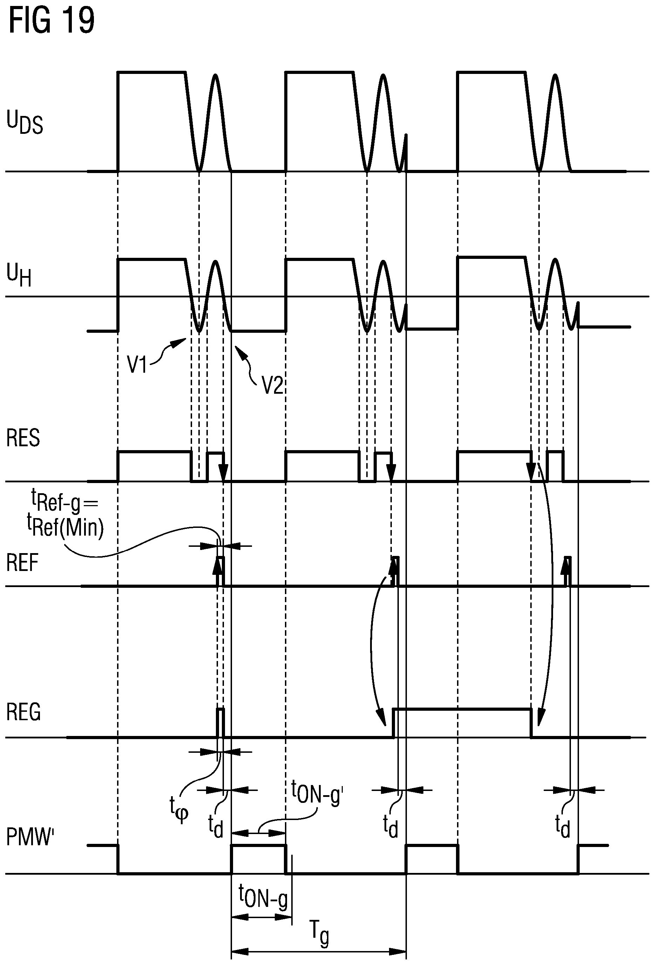

Ein weiteres Absenken auf eine niedrigere Leistung $P_{g'}$ führt zu einer Grenzsituation, dargestellt in Fig. 19. Aufgrund der verkürzten Einschaltzeit $t_{On-g'}$ des Schaltelements treten die Valleys V1, V2 noch früher auf. Das Einschalten erfolgt zu spät, nach dem 2. Valley V2.

In der entsprechenden Schaltperiode fallen alle abfallenden Nulldurchgänge der Hilfsspannung $U_H$ in eine Zeitspanne vor dem Impulsbeginn des Regelgrößensignals REG. Dies hat zur Folge, dass der Impuls des Regelgrößensignals REG erst mit dem ersten abfallenden Nulldurchgang der nächsten Schaltperiode beendet wird. Die Impulsdauer $t_\varphi$ des Regelgrößensignals REG ist somit sehr groß gegenüber der Impulsdauer $t_{Ref-g}$ (=$t_{Ref(Min)}$) des PWM-Referenzsignals REF. Die obere Taktfrequenzgrenze $f_{Max}$ ist erreicht.

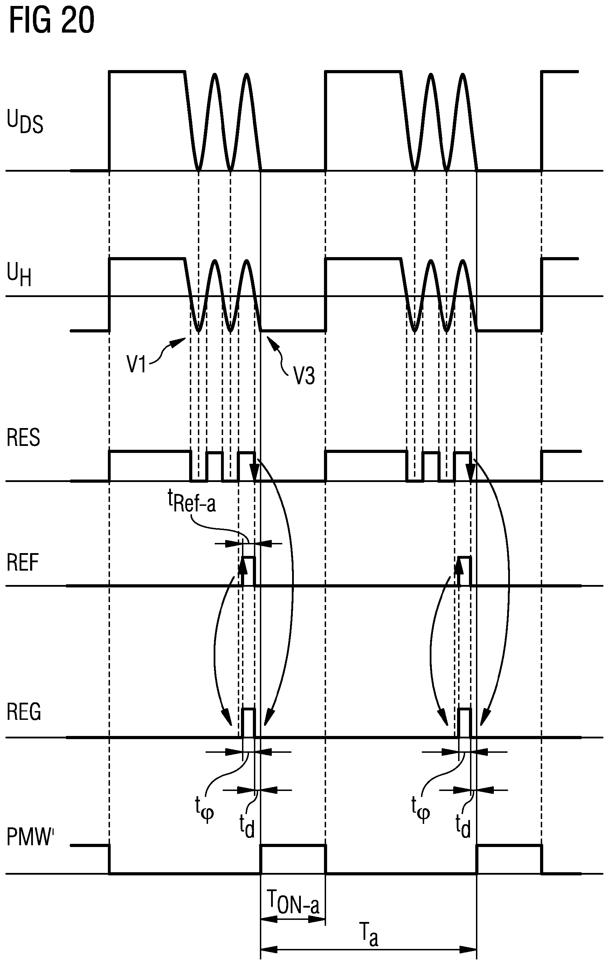

Die resultierende kleinere Stellgröße bewirkt einen Taktfrequenzsprung nach unten. Es ergibt sich eine niedrigere Taktfrequenz $f_a$, welche ein Einschalten beim 3. Valley V3 bewirkt. Es ist ein stabiler Zustand erreicht, dargestellt in Fig. 20.

Dabei sind die Signale wieder in der Weise abgestimmt, dass sich der richtige Taktfrequenzsprung einstellt. Diese Abstimmung ist in einfacher Weise durch Versuche für jeden Schaltwandler ermittelbar.

**Patentansprüche**

1. Verfahren zur Regelung eines Schaltwandlers mit quasiresonantem Schalten, wobei mittels eines PWM-Schaltreglers (1) ein PWM-Schaltsignal (PWM) mit einer variablen Taktfrequenz (f) erzeugt wird und wobei ein Resonanzsignal (RES) erzeugt wird, welches Valleys (V1, V2, V3...Vn) einer an einem Schaltelement anliegenden, mit einer Resonanzfrequenz schwingenden Spannung ($U_{DS}$) angibt, **dadurch gekennzeichnet, dass** ein PWM-Referenzsignal (REF) gebildet wird, wobei dessen jeweilige Impulsdauer ($t_{REF}$) umgekehrt proportional zur Höhe der Taktfrequenz (f) ist oder wobei ein linearer Zusammenhang mit fallender Impulsdauer ($t_{REF}$) bei steigender Frequenz (f) besteht, dass zur Erzeugung des PWM-Referenzsignals (REF) einem Sägezahnsignal (SIG) des PWM-Schaltreglers (1) eine zu der Taktfrequenz (f) direkt proportionale Steuerspannung ($U_{STR}$) überlagert wird, dass aus dem PWM-Referenzsignal (REF) ein Regelgrößensignal (REG) abgeleitet wird, indem dessen jeweilige Impulsdauer ($t_\varphi$) in Abhängigkeit des Resonanzsignals (RES) verlängert oder verkürzt wird und dass durch Änderung der Taktfrequenz (f) mittels eines Frequenzreglers (8) das Regelgrößensignal (REG) dem PWM-Referenzsignal (REF) nachgeregelt wird.

2. Verfahren nach Anspruch 1, **dadurch gekennzeichnet, dass** für den Frequenzregler (8) die aktuelle Impulsdauer ($t_\varphi$) des Regelgrößensignals (REG) als Regelgröße vorgegeben wird und die aktuelle Impulsdauer ($t_{REF}$) des PWM-Referenzsignals (REF) als Führungsgröße vorgegeben wird.

3. Verfahren nach einem der Ansprüche 1 bis 2, **dadurch gekennzeichnet, dass** für die jeweilige Impulsdauer ($t_{REF}$) des PWM-Referenzsignals (REF) ein obere Grenze ($t_{REF(Max)}$) und eine untere Grenze ($t_{REF(Min)}$) vorgegeben werden und dass bei Erreichung einer Grenze ($t_{REF(max)}$ bzw. $t_{REF(Min)}$) mittels des Frequenzreglers (8) ein Taktfrequenzsprung vorgegeben wird, welcher ein Einschalten des Schaltnetzteils bei einem früheren oder späteren Valley (V1, V2, V3...Vn) der schwingenden Spannung ($U_{DS}$) bewirkt.

4. Verfahren nach einem der Ansprüche 1 bis 3, **dadurch gekennzeichnet, dass** jeder Impuls des Regelgrößensignals (REG) gleichzeitig mit einem Impulsbeginn des PWM-Referenzsignals (REF) begonnen und gleichzeitig mit einer Impulsflanke des Resonanzsignals (RES) beendet wird.

5. Verfahren nach einem der Ansprüche 1 bis 4, **dadurch gekennzeichnet, dass** mittels eines Durchgangsdetektors, welcher die Durchgänge der Spannung ($U_{DS}$) am abgeschalteten Schaltelement durch einen Spannungsmittelwert erkennt, das Resonanzsignal (RES) als Abfolge von Durchgangsimpulsen gebildet wird.

6. Verfahren nach Anspruch 5, **dadurch gekennzeichnet, dass** jeder Impuls des Regelgrößensignals (REG) gleichzeitig mit einer Durchgangsimpulsflanke des Resonanzsignals (RES) beendet wird.

7. Verfahren nach einem der Ansprüche 3 bis 6, **dadurch gekennzeichnet, dass** für die obere Grenze der jeweiligen Impulsdauer ($t_{REF(Max)}$) des PWM-Referenzsignals (REF) ein Wert vorgegeben wird, der zwischen der Resonanzperiodendauer der am Schaltelement anliegenden Spannung ($U_{DS}$) und dem Zweifachen dieser Resonanzperiodendauer liegt.

8. Verfahren nach einem der Ansprüche 1 bis 7, **dadurch gekennzeichnet, dass** das PWM-Schaltsignal (PWM) einer Treiberstufe (3) des Schaltelements zeitverzögert zugeführt wird.

9. Verfahren nach Anspruch 8, **dadurch gekennzeichnet, dass** zur Zeitverzögerung des PWM-Schaltsignals (PWM) eine Totzeit ($t_d$) vorgegeben wird, welche einem Viertel der Resonanzperiodendauer der am Schaltelement anliegenden Spannung ($U_{DS}$) entspricht.

10. Schaltwandler, welcher zum quasiresonanten Schalten eingerichtet ist und eine Hauptwicklung, einen PWM-Schaltregler (1) zur Erzeugung eines PWM-Schaltsignals (PWM) mit einer Taktfrequenz (f), ein Schaltelement und einen Detektor (5) zur Erzeugung eines Resonanzsignals (RES), welches Valleys (V1, V2, V3...Vn) einer an dem Schaltelement anliegenden, mit einer Resonanzfrequenz schwingenden Spannung ($U_{DS}$) angibt, umfasst, **dadurch gekennzeichnet, dass** ein erster Schaltkreis (7) vorgesehen ist, welcher ein PWM-Referenzsignal (REF) mit derselben Taktfrequenz (f) und mit einer zur Höhe der Taktfrequenz (f) umgekehrt proportionalen jeweiligen Impulsdauer ($t_{REF}$) oder mit einer zu einer steigenden Taktfrequenz (f) in linearem Zusammenhang stehenden fallenden Impulsdauer ($t_{REF}$) bildet, wobei zur Erzeugung des PWM-Referenzsignals (REF) einem Sägezahsignal (SIG) des PWM-Schalt-regler (1) eine zu der Taktfrequenz (f) direkt proportionale Steuerspannung ($U_{STR}$) überlagert ist, dass ein zweiter Schaltkreis (6) vorgesehen ist, welcher aus dem PWM-Referenzsignal (REF) ein Regelgrößensignal (REG) bildet, dessen jeweilige Impulsdauer ($t_{\varphi}$) in Abhängigkeit des Resonanzsignals (RES) verlängert oder verkürzt ist und dass ein Frequenzregler (8) zur Änderung der Taktfrequenz (f) vorgesehen ist, welchem ein Differenzsignal zugeführt ist, das aus der Abweichung des Regelgrößensignals (REG) von dem PWM-Referenzsignal (REF) gebildet ist.

11. Schaltwandler nach Anspruch 10, **dadurch gekennzeichnet, dass** die aktuelle Impulsdauer ($t_{REF}$) des PWM-Referenzsignals (REF) abzüglich der aktuellen Impulsdauer ($t_{\varphi}$) des Regelgrößensignals (REG) dem Frequenzregler (8) als Differenzsignal zugeführt ist.

12. Schaltwandler nach Anspruch 10 oder 11, **dadurch gekennzeichnet, dass** der PWM-Schaltregler (1) einen Oszillator (9) zur Erzeugung des Sägezahsignals (SIG) umfasst, welches gemeinsam mit einem Stellgrößensignals ($U_f$) am Ausgang des Frequenzreglers (8) dem ersten Schaltkreis (7) zur Erzeugung des PWM-Referenzsignals (REF) zugeführt ist.

13. Schaltwandler nach einem der Ansprüche 10 bis 12, **dadurch gekennzeichnet, dass** eine mit der Hauptwicklung magnetisch gekoppelte Hilfswicklung angeordnet ist, an welcher ein Nulldurchgangsdetektor (5) eine Hilfsspannung ($U_H$) abgreift, welche bei einem Durchgang der Spannung ($U_{DS}$) am Schaltelement durch den Mittelwert einen Nulldurchgang aufweist und dass der Nulldurchgangsdetektor (5) ein Nulldurchgangssignal ausgibt.

14. Schaltwandler nach Anspruch 13, **dadurch gekennzeichnet, dass** das PWM-Referenzsignal (REF) und das Nulldurchgangssignal dem zweiten Schaltkreis (6) zur Erzeugung des Regelgrößensignals (REG) zugeführt sind.

**Claims**

1. Method for regulating a switching converter with quasi-resonant switching, wherein a PWM switching regulator (1) is used to generate a PWM switching signal (PWM) with a variable clock frequency (f) and wherein a resonance signal (RES) is generated which specifies valleys (V1, V2, V3...Vn) of a voltage ($U_{DS}$) applied to a switching element and oscillating with a resonance frequency, **characterised in that** a PWM reference signal (REF) is formed, wherein its respective pulse duration ($t_{REF}$) is conversely proportional to the level of the clock frequency (f) or wherein a linear association with a dropping pulse duration ($t_{REF}$) exists when the frequency (f) is increasing, that in order to generate the PWM reference signal (REF), a control voltage ($U_{STR}$) which is directly proportional to the clock frequency (f) is superimposed onto a saw tooth signal (SIG) of the PWM switching regulator (1), that a control variable signal (REG) is derived from the PWM reference signal (REF), by its respective pulse duration ($t_{\varphi}$) being lengthened or shortened as a function of the resonance signal (RES) and that by changing the clock frequency (f) by means of a frequency regulator (8), the control variable signal (REG) is readjusted to the PWM reference signal (REF).

2. Method according to claim 1, **characterised in that** for the frequency regulator (8) the current pulse duration ($t_{\varphi}$) of the control variable signal (REG) is predetermined as the control variable and the current pulse duration ($t_{REF}$) of the PWM reference signal (REF) is predetermined as a reference variable.

3. Method according to one of claims 1 to 2, **characterised in that** for the respective pulse duration ($t_{REF}$) of the PWM reference signal (REF), an upper limit ($t_{REF(Max)}$) and a lower limit ($t_{REF(Min)}$) are predetermined and that when a limit ($t_{REF(MAX)}$) or ($t_{REF(Min)}$) is reached by means of the frequency regulator (8) a clock frequency jump is predetermined, which causes the switching power supply to switch on in the case of an earlier or later valley (V1, V2, V3...Vn) of the oscillating voltage ($U_{DS}$).

4. Method according to one of claims 1 to 3, **characterised in that** each pulse of the control variable signal (REG) is begun at the same time as a pulse start of the PWM reference signal (REF) and is ended at the same time as a pulse edge of the resonance signal (RES).

5. Method according to one of claims 1 to 4, **characterised in that** the resonance signal (RES) is formed as a sequence of through pulses by means of a through detector which identifies the passages of the voltage ($U_{DS}$) on the switched-off switching element by means of a voltage average value.

6. Method according to claim 5, **characterised in that** each pulse of the control variable signal (REG) is ended at the same time as a through pulse edge of the resonance signal (RES).

7. Method according to one of claims 3 to 6, **characterised in that** for the upper limit of the respective pulse duration ($t_{REF(Max)}$) of the PWM reference signal (REF), a value is predetermined which lies between the resonance period duration of the voltage ($U_{DS}$) applied to the switching element and two times this resonance period duration.

8. Method according to one of claims 1 to 7, **characterised in that** the PWM switching signal (PWM) is supplied to a driver stage (3) of the switching element in a time-delayed manner.

9. Method according to claim 8, **characterised in that** a dead time ($t_d$) is predetermined for the time delay of the PWM switching signal (PWM), said dead time corresponding to a quarter of the resonance period duration of the voltage ($U_{DS}$) applied to the switching element.

10. Switching converter which is designed for quasi-resonant switching and a main winding, a PWM switching regulator (1) for generating a PWM switching signal (PWM) with a clock frequency (f), a switching element and a detector (5) for generating a resonance signal (RES), which specifies valleys (V1, V2, V3...Vn) of a voltage ($U_{DS}$) applied to the switching element and oscillating with a resonance frequency, **characterised in that** a first switching circuit (7) is provided, which forms a PWM reference signal (REF) with the same clock frequency (f) and with a respective pulse duration ($t_{REF}$) which is conversely proportional to the level of the clock frequency (f) or with a pulse duration ($t_{REF}$) which drops in linear association with an increasing clock frequency (f), wherein in order to generate the PWM reference signal (REF), a control voltage ($U_{STR}$) which is directly proportional to the clock frequency (f) is superimposed onto a saw tooth signal (SIG) of the PWM switching regulator (1), that a second switching circuit (6) is provided, which forms a control variable signal (REG) from the PWM reference signal (REF), the respective pulse duration ($t_\varphi$) of which is lengthened or shortened as a function of the resonance signal (RES) and that a frequency regulator (8) is provided to change the clock frequency (f), to which a differential signal is supplied, which is formed from the deviation of the control variable signal (REG) from the PWM reference signal (REF).

11. Switching converter according to claim 10, **characterised in that** the current pulse duration ($t_{REF}$) of the PWM reference signal (REF) minus the current pulse duration ($t_\varphi$) of the control variable signal (REG) is supplied to the frequency regulator (8) as a differential signal.

12. Switching converter according to claim 10 or 11, **characterised in that** the PWM switching regulator (1) comprises an oscillator (9) for generating the saw tooth signal (SIG), which, together with a correcting variable signal (Uf) at the output of the frequency regulator (8), is supplied to the first switching circuit (7) in order to generate the PWM reference signal (REF).

13. Switching converter according to one of claims 10 to 12, **characterised in that** an auxiliary winding coupled magnetically to the main winding is arranged, on which a zero crossing detector (5) taps an auxiliary voltage ($U_H$) which has a zero crossing when the voltage ($U_{DS}$) at the switching element is crossed by the average value and that the zero crossing detector (5) outputs a zero crossing signal.

14. Switching converter according to claim 13, **characterised in that** the PWM reference signal (REF) and the zero crossing signal are supplied to the second switching circuit (6) in order to generate the control variable signal (REG).

**Revendications**

1. Procédé destiné au réglage d'un convertisseur de commutation avec commutation quasi-résonante, un signal de commutation PWM (PWM) avec une fréquence d'horloge variable (f) étant généré au moyen d'un régulateur de commutation PWM (1) et un signal de résonance (RES) étant généré, lequel indique des creux (V1, V2, V3...Vn) d'une tension ($U_{DS}$) appliquée à un élément de commutation et oscillant avec une fréquence de résonance, **caractérisé en ce qu'**un signal de référence PWM (REF) est formé, sa durée d'impulsion respective ($t_{REF}$) étant inversement proportionnelle à la hauteur de la fréquence d'horloge (f) ou un rapport linéaire avec une durée d'impulsion ($t_{REF}$) qui diminue lorsque la fréquence (f) augmente existant, **en ce que**, pour générer le signal de référence PWM (REF), une tension de commande ($U_{STR}$) directement proportionnelle à la fréquence d'horloge (f) est superposée à un signal en dent de scie (SIG) du régulateur de commutation PWM (1), **en ce qu'**est dérivé du signal de référence PWM (REF) un signal de grandeur de réglage (REG) par prolongation ou raccourcissement de sa durée d'impulsion respective ($t_\varphi$) en fonction du signal de résonance (RES) et **en ce que** le signal de grandeur de réglage (REG) est ajusté sur le signal de référence PWM (REF) par modification de la fréquence d'horloge (f) au moyen d'un régulateur de fréquence (8).

2. Procédé selon la revendication 1, **caractérisé en ce qu'**est donnée, pour le régulateur de fréquence (8), la durée d'impulsion actuelle ($t_\varphi$) du signal de grandeur de réglage (REG) en tant que grandeur de réglage et la durée d'impulsion actuelle ($t_{REF}$) du signal de référence PWM (REF) en tant que grandeur de consigne.

3. Procédé selon l'une des revendications 1 à 2, **caractérisé en ce que** sont spécifiées, pour la durée d'impulsion respective ($t_{REF}$) du signal de référence PWM (REF), une limite supérieure ($t_{REF(Max)}$) et une limite inférieure ($t_{REF(Min)}$) et **en ce qu'**est spécifié au moyen du régulateur de fréquence (8), lorsqu'une limite ($t_{REF(Max)}$ resp. $t_{REF(Min)}$) est atteinte, un saut de fréquence d'horloge qui provoque un enclenchement de l'alimentation à découpage pour un creux plus précoce ou plus tardif (V1, V2, V3...Vn) de la tension oscillante ($U_{DS}$).

4. Procédé selon l'une des revendications 1 à 3, **caractérisé en ce que** chaque impulsion du signal de grandeur de réglage (REG) est démarrée en même temps qu'un début d'impulsion du signal de référence PWM (REF) et est terminée en même temps qu'un flanc d'impulsion du signal de résonance (RES).

5. Procédé selon l'une des revendications 1 à 4, **caractérisé en ce que** le signal de résonance (RES) est formé comme séquence d'impulsions de passage au moyen d'un détecteur de passage qui identifie par une valeur moyenne de tension les passages de la tension ($U_{DS}$) au niveau de l'élément de commutation coupé.

6. Procédé selon la revendication 5, **caractérisé en ce que** chaque impulsion du signal de grandeur de réglage (REG) est terminée en même temps qu'un flanc d'impulsion de passage du signal de résonance (RES).

7. Procédé selon l'une des revendications 3 à 6, **caractérisé en ce qu'**est spécifiée, pour la limite supérieure de la durée d'impulsion respective ($t_{REF(Max)}$) du signal de référence PWM (REF), une valeur qui se situe entre la durée de période de résonance de la tension ($U_{DS}$) appliquée à l'élément de commutation et le double de cette durée de période de résonance.

8. Procédé selon l'une des revendications 1 à 7, **caractérisé en ce que** le signal de commutation PWM (PWM) est amené de manière retardée à un étage d'attaque (3) de l'élément de commutation.

9. Procédé selon la revendication 8, **caractérisé en ce qu'**est spécifié, pour retarder le signal de commutation PWM (PWM), un temps mort ($t_d$) qui correspond à un quart de la durée de période de résonance de la tension ($U_{DS}$) appliquée à l'élément de commutation.

10. Convertisseur de commutation qui est configuré pour la commutation quasi-résonante et qui comprend un enroulement principal, un régulateur de commutation PWM (1) pour générer un signal de commutation PWM (PWM) avec une fréquence d'horloge (f), un élément de commutation et un détecteur (5) pour générer un signal de résonance (RES) qui indique des creux (V1, V2, V3...Vn) d'une tension ($U_{DS}$) appliquée à l'élément de commutation et oscillant avec une fréquence de résonance, **caractérisé en ce qu'**est prévu un premier circuit (7) qui forme un signal de référence PWM (REF) avec la même fréquence d'horloge (f) et avec une durée d'impulsion respective ($t_{REF}$) inversement proportionnelle à la hauteur de la fréquence d'horloge (f) ou avec une durée d'impulsion descendante ($t_{REF}$) en rapport linéaire avec une fréquence d'horloge montante (f), dans lequel une tension de commande ($U_{STR}$) directement proportionnelle à la fréquence d'horloge (f) est superposée à un signal en dent de scie (SIG) du régulateur de commutation PWM (1) pour générer le signal de référence PWM (REF), **en ce qu'**est prévu un deuxième circuit (6) qui forme, à partir du signal de référence PWM (REF), un signal de grandeur de réglage (REG) dont la durée d'impulsion respective ($t_\varphi$) est prolongée ou raccourcie en fonction du signal de résonance (RES) et **en ce qu'**est prévu un régulateur de fréquence (8) pour modifier la fréquence d'horloge (f), auquel est amené un signal différentiel qui est formé à partir de la différence entre le signal de grandeur de réglage (REG) et le signal de référence PWM (REF).

11. Convertisseur de commutation selon la revendication 10, **caractérisé en ce que** la durée d'impulsion actuelle ($t_{REF}$) du signal de référence PWM (REF) moins la durée d'impulsion actuelle ($t_\varphi$) du signal de grandeur de réglage (REG) est amenée au régulateur de fréquence (8) en tant que signal différentiel.

12. Convertisseur de commutation selon la revendication 10 ou 11, **caractérisé en ce que** le régulateur de commutation PWM (1) comprend un oscillateur (9) pour générer le signal en dent de scie (SIG), lequel est amené au premier circuit (7) avec un signal de grandeur de réglage (Uf) à la sortie du régulateur de fréquence (8) pour générer le signal de référence PWM (REF).

13. Convertisseur de commutation selon l'une des revendications 10 à 12, **caractérisé en ce qu'**est agencé un enroulement auxiliaire couplé magnétiquement à l'enroulement principal et au niveau duquel un détecteur de passage par zéro (5) capte une tension auxiliaire ($U_H$) qui présente un passage par zéro lors d'un passage de la tension ($U_{DS}$) au niveau de l'élément de commutation par la valeur moyenne et **en ce que** le détecteur de passage par zéro (5) émet un signal de passage par zéro.

14. Convertisseur de commutation selon la revendication 13, **caractérisé en ce que** le signal de référence PWM (REF) et le signal de passage par zéro sont amenés au deuxième circuit (6) pour générer le signal de grandeur de réglage (REG).

## FIG 1

## FIG 2

FIG 3

$t_{Ref(Min)}$

$U_{STG}$

SIG

REF

SIG
$U_{reg}$

PWM

| ON | ON | ON | ON |

PWM'

| ON | ON | ON | ON |

$t_d$

# FIG 4

## FIG 5

## FIG 6

# FIG 7

## FIG 8

# FIG 9

# FIG 10

EP 2 469 695 B1

# FIG 11

$U_{DS}$

$U_H$

V1 V3

RES

$t_{Ref-b}$

REF

REG

$t_\varphi$

$t_d$  $T_{ON-b}$

PMW'

$T_{ON-c}$

$t_d$

$T_b$

21

EP 2 469 695 B1

FIG 12

# FIG 13

EP 2 469 695 B1

FIG 14

24

# FIG 15

# FIG 16

# FIG 17

$U_{DS}$

$U_H$

V1  V2

RES

$t_{Ref-e}$

REF

REG

$t_\varphi$

$t_d$  $T_{ON-g}$

$t_d$

PMW'

$T_{ON-e}$

$T_e$

# FIG 18

# FIG 19

FIG 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009091955 A1
- US 20100315838 A1